# EUROPEAN PATENT SPECIFICATION

(11) **EP 4 402 063 B1**
(45) Date of publication and mention of the grant of the patent: **21.10.2026**
(21) Application number: 22870435.9
(22) Date of filing: 20.07.2022
(51) Int. Cl.: B65B 5/04, B65G 47/08, B65G 43/08, B65G 47/29

(54) **A GROUPING MACHINE**
GRUPPIERUNGSMASCHINE
MACHINE DE REGROUPEMENT

(30) Priority: 17.09.2021 TR 202114610
(43) Date of publication of application: 24.07.2024
(73) Proprietor: Eti Makina Sanayi ve Ticaret A.S., Odunpazari/Eskisehir (TR)
(72) Inventor: SUZEN, Emret, Odunpazari/Eskisehir (TR)
(74) Representative: Kaya, Erdem
(86) International application number: PCT/TR2022/050774
(87) International publication number: WO 2023/043408

(56) References cited:
- EP-A1- 0 242 017
- EP-A1- 3 147 228
- EP-B1- 2 766 265
- US-A- 3 930 572
- US-A- 4 832 167
- US-A- 5 711 137
- US-A1- 2003 123 968
- US-A1- 2007 187 886
- US-A1- 2008 283 360

## Description

### TECHNICAL FIELD

The present invention relates to a grouping machine, in order to provide grouping of products, aligned in at least one transport path, at predetermined numbers, and comprising at least one first movement unit which can move at least one stopping shoe, positioned in the vicinity of the transport path and which manages movement of products along the transport path, in predetermined manner volumetrically in an X axis, and at least one second movement unit which can move at least one separator in a predetermined manner volumetrically in a Y axis, for providing separation of products, kept on the transport path by said first movement unit, from predetermined number of product arrays.

### PRIOR ART

There are important process steps in packaging of foodstuff like biscuits, crackers, etc. as well as in production of said foodstuff. During packaging of such packaged food products, the issues like the number of items which exist inside the package, the positions of said items inside the package, etc. are important for an aesthetic outer appearance.

In the field of packaging of foodstuff like biscuits, crackers, etc., the products to be packaged are mostly fed along pluralities of U-shaped guides and are aligned on edge such that they contact each other. Products like biscuits, crackers, etc. aligned on edge are sent to portioning machines in a grouped manner in the form of portion groups formed by pluralities of products where essentially each related main surfaces are in contact with each other.

In packaging lines, portions can be formed by volumetric or numeric method. In volumetric method, each portion has predetermined length and the number of products which form the portion may change. In numeric method, each portion has predetermined number of products and the portion length may change. Volumetric portioning machines move a predetermined fixed distance and separate the portion part from the products aligned in the form of continuous array in front of the machine. Numeric portioning machines separate predetermined number of products generally one by one from products aligned in continuous array form and form the portion.

In the known state of the art, a big part of the machines which realize portioning of on edge products operate only volumetrically or numerically.

The solution presented in the application with no EP3147228B1 known in the art presents the volumetric and numeric method on the same machine. However, for numeric portioning method, as also mentioned above, a mechanical pusher is used, and method of separation one by one from the aligned products in the form of continuous array is used. Additionally, in numeric mode, the product changes axis which is at least equal to its length and passes to another channel which is parallel to the input channel. The product is stopped and aligned by hitting a mechanical stopper in the channel where passage is realized. In the numeric method presented in the patent, the same problems continue for products which are sensitive against impacts and frictions in case of usage in the operation mode. Additionally, it is considered that the axial change movement leads to time loss and therefore to decrease of the portioning speed.

The method and arrangement described in the known US2007187886 patent application , which discloses a grouping machine according to the preamble of claim 1, relates to forming stacks of specific lengths from signatures successively conveyed from a printing press to a stack-forming device. This invention aims to reduce waste and minimize changeover times between different productions. The method counts the remaining signatures from the current production and adjusts the stacking process accordingly, ensuring a smooth transition between productions without interruptions. By utilizing the remaining signatures, waste is minimized, and stacks are formed efficiently at the desired length.

Volumetric and numeric portioning machines are completely different machines, and their structures and technologies are completely different from each other. Due to this, big problems occur when different product types must be packaged by using the same system in a manner compliant to volumetric or numeric method. Big interventions must be made in the machine or the machine must be completely changed in order to change the portioning method.

Machines which realize portioning by means of volumetric method move to a predetermined distance in each cycle and apply a separator between the aligned product array, and realize portion formation process. Depending on product thickness or machine precision, the number of products which form the portion shows change. When deficient product is taken into the portion, these packages are detected and separated by the package weighing units because of legal obligatory, and they form waste. When excessive number of products is taken into the package, excessiveness occurs or problems like product breakage, package failure, etc. are triggered during packaging, and waste occurs. Moreover, in such machines, give away problems are frequently faced. The problem of excessive product means that there is more than predetermined number of products inside the package. This condition leads to deviation from the ingredient characteristics written on the package, and moreover leads to additional cost for the producer company.

The machines which realize portioning by means of numeric method can correctly provide the number of products inside the portion and cannot be used for every product because these machines form portion by generally separating predetermined number of products from the products arranged in a continuous array form. Separation from the array is realized by means of a mechanical pusher. Meanwhile, a mechanical impact occurs between the mechanical pusher and the product and friction occurs between the product, separated from the array, and a prior product. Depending on the length and angle of the product array, since all pressure of the array is transmitted to the foremost product, this pressure may lead to formation of friction at levels which may give damage to the product. Therefore, numeric portioning machine cannot be used for products which are sensitive against impacts and friction.

As a result, because of the abovementioned problems, an improvement is required in the related technical field.

### BRIEF DESCRIPTION OF THE INVENTION

The present invention relates to a grouping machine, for eliminating the abovementioned disadvantages and for bringing new advantages to the related technical field.

An object of the present invention is to provide a grouping machine for providing grouping of products at predetermined numbers.

In order to realize the abovementioned objects and the objects which are to be deducted from the detailed description below, the present invention provides a grouping machine according to claim 1.

In order to provide grouping of products, aligned in at least one transport path, at predetermined numbers, the grouping machine comprises at least one first movement unit which can move at least one stopping shoe, positioned in the vicinity of the transport path and which manages movement of products along the transport path, in predetermined manner volumetrically in an X axis, and at least one second movement unit which can move at least one separator in a predetermined manner volumetrically in a Y axis, for providing separation of products, kept on the transport path by said first movement unit, from predetermined number of product arrays. Accordingly, the improvement is that the subject matter grouping machine comprises at least one image processing unit which can detect the separation distance for determining the position of the first movement unit and of the second movement unit with respect to the products, and at least one precise adjustment unit which can relatively move for precisely positioning at least one of said stopping shoe provided on the first movement unit, and said separator provided on the second movement unit depending on the data received from said image processing unit. Thus, products taken from transport path are grouped in the desired manner.

In another possible embodiment of the present invention, at least one drive element is provided which is position-controlled for producing force to the relative movement on said precise adjustment unit.

In another possible embodiment of the present invention, at least one guided cylinder is provided for linear movement on the precise adjustment unit.

In another possible embodiment of the present invention, the precise adjustment unit is provided on the first movement unit.

In another possible embodiment of the present invention, the precise adjustment unit is provided on the second movement unit.

In another possible embodiment of the present invention, the precise adjustment unit is provided both on the first movement unit and on the second movement unit.

In another possible embodiment of the present invention, the precise adjustment unit is relatively movable on at least one of X axis and Y axis.

According to the present invention, said transport path comprises at least one first transport path where the products are accumulated, and at least one second transport path which can at least partially rotate around at least one rotation center in order to provide carrying of the grouped products to the next process step.

In another possible embodiment of the present invention, the transport path is positioned in an at least partially inclined form to the floor in order to enable movement of the products in X axis depending on gravity.

In another possible embodiment of the present invention, at least one conveyor line is provided which is associated in a manner releasing the grouped products by means of at least partial rotation of said second transport path in said rotation center.

In another possible embodiment of the present invention, at least one third movement unit is provided for delimiting the movement of products, which exist on the transport path, in X axis. In another possible embodiment of the present invention, at least one stopper part is provided, which can be rested to the product, on the third movement unit.

Moreover, the invention provides a method according to claim 12. The method comprises the steps of positioning at: A first position where the products are aligned in the transport path and which provides keeping of the aligned products at a second movement unit side,
A resting position where the second movement unit releases the products and where meanwhile the first movement unit keeps the products,
At least one drawback position where the products are moved in X axis at least partially,
A separation position where the products to be grouped are separated from other products by moving relatively in addition to the present volumetric movement of at least one of the first movement unit and the second movement unit by the precise adjustment unit in accordance with the position data received from the image processing unit. Thus, products taken from transport path are grouped in the numerically desired manner.

The method comprises the step of positioning the products, separated after the separation position, in at least one release position by means of rotation of the second transport path around the rotation center at least partially.

### BRIEF DESCRIPTION OF THE FIGURES

In Figure 1, a representative frontal view of the subject matter grouping machine at the first position is given.
In Figure 2, a representative frontal view of the subject matter grouping machine at the resting position is given.
In Figure 3, a representative frontal view of the subject matter grouping machine at the drawback position is given.
In Figure 4, a representative frontal view of the subject matter grouping machine at the separation position is given.
In Figure 5, a representative frontal view of the subject matter grouping machine at the release position is given.
In Figure 6, a representative frontal view of the subject matter grouping machine at the first position is given.
In Figure 7, a representative frontal view of the subject matter grouping machine at the resting position is given.
In Figure 8, a representative frontal view of the subject matter grouping machine at the drawback position is given.
In Figure 9, a representative frontal view of the subject matter grouping machine at the separation position is given.
In Figure 10, a representative frontal view of the subject matter grouping machine at the release position is given.

### DETAILED DESCRIPTION OF THE INVENTION

The present invention relates to a grouping machine (1) according to claim 1. Embodiments of the invention become apparent from the dependent claims. The grouping machine (1) is used in separating and grouping of products (U) in industrial food industry. The grouping machine (1) enables positioning of the product (U) while the product (U) is in continuous flow before packaging. Thanks to this, the products (U) are grouped at a desired number for packaging. The product (U) mentioned in the invention can be an element like biscuit, cracker, etc. However, the present invention is not limited with these and it can be different shelf product (U) foodstuffs or a different element which is compliant for grouping.

There is at least one transport path (10) on the subject matter grouping machine (1). The products (U) are carried on said transport path (10). Said transport path (10) is positioned in an inclined form in a manner enabling carrying of the product (U) depending on gravity without needing an additional force. It is assumed that the transport path (10) is at least one X axis (X) in the extension direction. The mutual sides of this X axis (X) are -X direction (-X) and +X direction (+X). The product (U) is fed to the transport path (10) from -X direction (-X) and the grouping process is realized in +X direction (+X). The transport path (10) essentially has two parts. These are at least one first transport path (11) and at least one second transport path (12). Said first transport path (11) is essentially positioned at a fixed position. The product (U) is positioned at the first transport path (11) firstly in the transport path (10). Said second transport path (12) provides carrying the product (U) to the conveyor line (20) after grouping of the product (U). The second transport path (12) is configured to be able to rotate around a rotation center (I) from one side at least partially. The second transport path (12) can contact the first transport path (11) by means of rotation in the clockwise direction (SY) at least partially at said rotation center (I). In case the second transport path (12) rotates in a direction which is opposite to the clockwise direction (SY), the second transport path (12) separates from the first transport path (11). As the second transport path (12) is rotated around the rotation center (I) in this manner, the products (U) taken from the first transport path (11) are carried to at least one conveyor line (20). In order for the second transport path (12) to leave the product (U) to the conveyor line (20), the base is at least partially opened and the products (U) are released.

The grouping machine (1) is associated with at least one conveyor line (20). Said conveyor line (20) enables carrying of the grouped products (U) to a different predetermined operation. In a possible embodiment, this different operation can be a packaging step.

There is at least one first movement unit (30) on the grouping machine (1). Said first movement unit (30) is used in grouping the products (U) which exist on the transport path (10). The first movement unit (30) is configured to provide holding of the products (U), which exist on the transport path, as from the first transport path (11) and enable movement of said products (U) at desired distance along the second transport path (12). The first movement unit (30) is configured to realize movement in X axis (X) at least partially. As the first movement unit (30) is moved in X axis (X), the products (U) which exist in the transport path (10) can be stopped in the transport path (10). The first movement unit (30) has various components in order to be able to have movement freedom in this manner.

The first movement unit (30) can essentially be positioned on the body (not shown in the figures) of the grouping machine (1). There is at least one first console (31) on the first movement unit (30). Said first console (31) provides keeping the first movement unit (30) on the grouping machine (1) and provides at least one stopping shoe (32) to move in an at least partially volumetric manner. In the first movement unit (30), there can be at least one precise adjustment unit (70) between the first console (31) and the stopping shoe (32). Said precise adjustment unit (70) enables said stopping shoe (32) to realize relative movement at least partially with respect to the first console (31). For providing this, there is at least one guided cylinder (71) and at least one drive element (72), which can enable linear movement, on the precise adjustment unit (70). Said drive element (72) is essentially a drive element which is position controlled. Said guided cylinder (71) can have a guide structure which can move the stopping shoe (32) in a linear manner. The stopping shoe (32) is rested to the products (U) on the transport path (10) and provides stopping of the products (U) on the transport path (10) and provides movement as needed. The stopping shoe (32) is preferably a stopper provided in flat plate form. The stopping shoe (32) can be moved relatively by means of the drive element (72) volumetrically by means of the first console (31) along X axis (X). As the drive element (72) is essentially position-controlled, the stopping shoe (32) is moved at the desired position in X axis (X) and can be fixed in a precise manner.

The grouping machine (1) comprises at least one second movement unit (40). Said second movement unit (40) is configured to enable separation of predetermined number of products (U) on the transport path from the other products (U) which exist on the transport path (10). The second movement unit (40) can have movement freedom in axis X (X). Additionally, the second movement unit (40) can be moved in at least one Y axis (Y). Said Y axis (Y) is essentially assumed to be orthogonal to X axis (X). As in X axis (X), Y axis (Y) has +Y direction (+Y) and -Y direction (-Y). Said -Y direction (-Y) is essentially the side of the transport path (10) which faces the floor. Said +Y direction (+Y) is the opposite side of -Y direction (-Y). The second movement unit (40) enables separating and grouping of the products (U), which exist on the transport path (10), at a predetermined number depending on this movement. The second movement unit (40) has various components in order to have movement freedom in this manner.

The second movement unit (40) can essentially be positioned on the body (not shown in the figures) of the grouping machine (1). There is at least one second console (41) on the second movement unit (40). Said second console (41) provides keeping of the second movement unit (40) on the grouping machine (1) and provides at least one separator (42) to move in a volumetric manner at least partially. At the second movement unit (40), there can be a precise adjustment unit (70) between the second console (41) and the separator (42). Said precise adjustment unit (70) enables relative movement of said separator (42) with respect to the second console (41) at least partially. For providing this, there is a guided cylinder (71) and a drive element (72) which can enable linear movement on the precise adjustment unit (70). The separator (42) is rested to the products (U) on the transport path (10) and provides stopping on the transport path (10) and movement as needed. The separator (42) is a stopper provided preferably in flat plate form. The separator (42) can be moved relatively by using precise adjustment unit (70) between two points by means of volumetric principle at least partially along X axis (X) by means of the second console (41). In alternative embodiments of the present invention, the separator (42) can also be moved in Y axis (Y). By means of this, the separator (42) is moved at the desired position in X axis (X) and can be fixed in a precise manner. Various drive elements can be used for movement of the separator (42) in Y axis (Y). These drive elements provide movement of the second console (41) directly in Y axis (Y). By means of this, the separator (42) can be placed between the products (U).

The grouping machine (1) can comprise at least one third movement unit (50) as needed. Said third movement unit (50) delimits the movement of the remaining products (U) in the transport path (10) after the products (U) are grouped and clustered in the transport path (10). For providing this, the third movement unit (50) can be moved in Y axis (Y). The third movement unit (50) provides holding of the products (U) which exist in the transport path (10) depending on this movement and enables realization of the separation process comfortably. The third movement unit (50) has various components in order to have such movement freedom.

The third movement unit (50) can essentially be positioned on the body (not shown in the figures) of the grouping machine (1). There is at least one third console (51) on the third movement unit (50). Said third console (51) provides holding of the third movement unit (50) on the grouping machine (1) and movement thereof between two points. The third movement unit (50) comprises at least one stopper part (52). Said stopper part (52) is rested to the products (U) on the transport path (10) and provides stopping thereof on the transport path (10). The stopper part (52) is preferably a stopper provided in flat plate form. The stopper part (52) is moved in Y axis (Y). Various drive elements can be positioned for actuating the stopper part (52) in Y axis (Y). These drive elements provides direct movement of stopper part (52) in Y axis (Y). Thus, the stopper part (52) can be placed between the products (U).

There is at least one image processing unit (60) on the subject matter grouping machine (1). Said image processing unit (60) is configured to detect the presence of the products (U) carried on the grouping machine (1) by means of visual methods. In a possible embodiment of the present invention, the image processing unit (60) is a camera. The image processing unit (60) is known in the art and is used in the steps of raw material and production tracking, fault detection, quality assurance and position determination in industry. The image processing unit (60) realizes information detection for positioning of the first movement unit (30) and the second movement unit (40) relatively with respect to the products (U) which exist on the transport path. Depending on the result of this detection; the distance, occupied by the predetermined number of products (U) on the transport path (10), is detected, and accordingly, the position adjustment of the first movement unit (30) and the second movement unit (40) is realized. In order to be to realize this position adjustment, the image processing unit (60) is associated with the precise adjustment unit (70). The image processing unit (60) can be configured to have at least partially rotation freedom in order to realize detection in various directions. By means of this, the image processing unit (60) can be operated in an efficient manner at transport paths with different dimensions. Additionally, the part of the image processing unit (60) which faces the transport path can be at least partially illuminated. Thanks to this, the capability of detection of the distances between the products (U) by the image processing unit (60) is improved.

There is moreover at least one guide element (21) on the grouping machine (1). Said guide element (21) prevents the dispersions during rotation of the product (U), grouped in the second transport path (12), around the rotation center (I) and during the release of said product (U) onto the conveyor line (20). In order to realize this, there are essentially two mutual guide elements (21). During rotation of the second transport path (12), the grouped product (U) is passed through this gap and is transferred to the conveyor line (20) by opening of the base.

The subject matter grouping machine (1) can have two different versions under this main structure. These are a first version (V1) and a second version (V2). In both of these versions, the positions of the grouping machine (1) at various steps are similar to each other. These positions are respectively a first position (K1), a resting position (K2), a drawback position (K3), a separation position (K4) and a release position (K5). These positions respectively enable taking of the product (U) and grouping thereof. The operation principles of the grouping machine (1) at these two different versions are hereunder described;

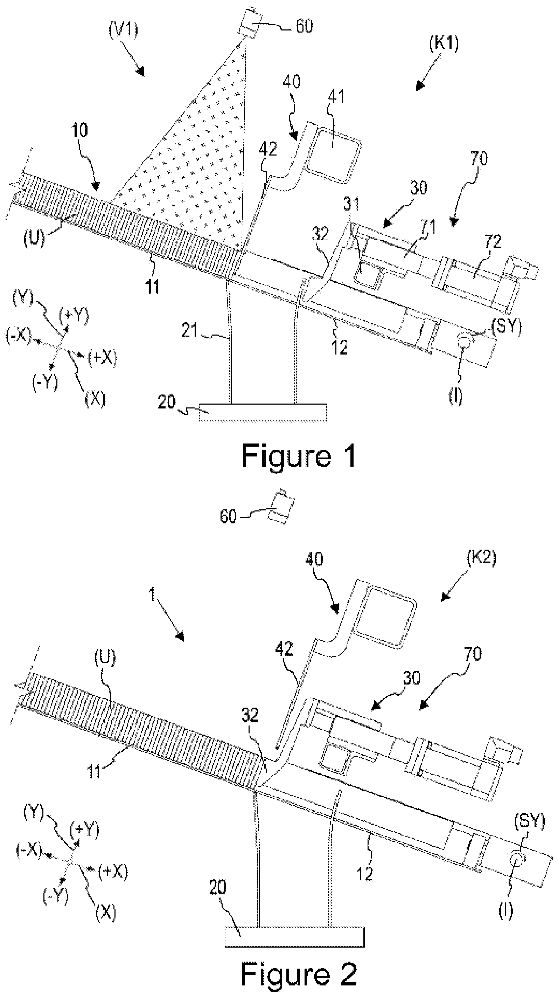

With reference to Figures 1-5, in the first version (V1), the grouping machine (1) has the first movement unit (30) which can move in X axis (X) and the second movement unit (40) which can move in Y axis (Y). Grouping of the product (U) is provided depending on these movement freedoms.

In Figure 1, a representative frontal view of the subject matter grouping machine (1) at the first position (K1) is given. Said first position (K1) is the beginning step based on packaging of the products (U). At this first position (K1); the products (U) are sufficiently arranged on the transport path (10). The first transport path (11) and the second transport path (12) are in contact with each other on the transport path (10). The first movement unit (30) stays in a free form on the second transport path (12). The second movement unit (40) keeps the products (U) which exist on the transport path (10). For providing this, the separator (42) is moved in -Y direction (-Y) and is rested to the transport path (10). Moreover, the image processing unit (60) is in image capturing mode. In the grouping machine (1), the distances, which the stopping shoe (32) shall move in +X direction (+X) and -X direction (-X), are predetermined values. These values are entered by the operator to the control panel (not shown in the figures) of the grouping machine (1) before packaging of the products (U). In the photograph processed here, product (U), which is in number corresponding to the number of products (U) desired to exist in a portion, is marked and is transformed into distance information and is turned into a data.

In Figure 2, a representative frontal view of the subject matter grouping machine (1) at the resting position (K2) is given. Said resting position (K2) is the position where the products (U) which exist in the transport path (10) are rested to the first movement unit (30). For providing this, the stopping shoe (32) moves in -X direction (-X) from the first position (K1) and is rested to the products (U) which exist at the transport path (10). Meanwhile, the second movement unit (40) is moved in +Y direction (+Y). By means of this, the separator (42) is separated from the products (U) and the stopping shoe (32) is held.

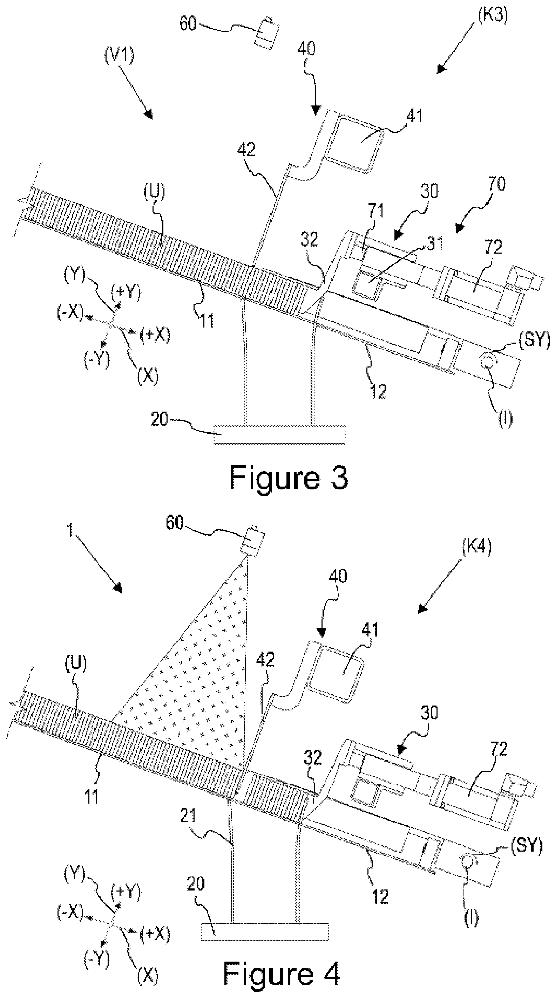

In Figure 3, a representative frontal view of the subject matter grouping machine (1) at the drawback position (K3) is given. At said drawback position (K3), the products (U) which exist on the transport path (10) are moved in +X direction (+X) in a controlled manner. For providing this, the first movement unit (30) moves the stopping shoe (32) in +X direction (+X). Together with this movement process, the distance between the stopping shoe (32) and the separator (42) becomes bigger. This distance is adjusted at a predetermined value. In the adjustment of the distance between the stopping shoe (32) and the separator (42), the data taken from the image processing unit (60) are important. The image processing unit (60) detects the distance depending on the number of products while grouping the products (U), and manages the first movement unit (30). Depending on the data received from the image processing unit (60), the precise adjustment unit (70) moves the stopping shoe (32) relatively, and precise adjustment is made.

In Figure 4, a representative frontal view of the subject matter grouping machine (1) at the separation position (K4) is given. At the separation position (K4), the first separation movement is realized for grouping in the transport path (10). At the separation position (K4), the second movement unit (40) moves the separator (42) in -Y direction (-Y) and begins to enter between the products (U) positioned in a sequenced manner on the transport path (10). During this process, the first movement unit (30) stops for a short duration. Thanks to this stopping, damaging of the product (U) is prevented. Afterwards, the first movement unit (30) partially moves in +X direction (+X). By means of this, partial separation is provided between the products (U). Thus, correct number of grouping is realized for the products (U). Meanwhile, while the products (U) exist on the transport path (10), the image processing unit (60) captures images again. The image captured by the image processing unit (60) is transmitted to the processor. In the image processed here, the product (U) which is in number corresponding to the number of products (U) desired to exist in a single group, is marked and is transformed into distance information and is turned into a data which can be used by the precise adjustment unit (70).

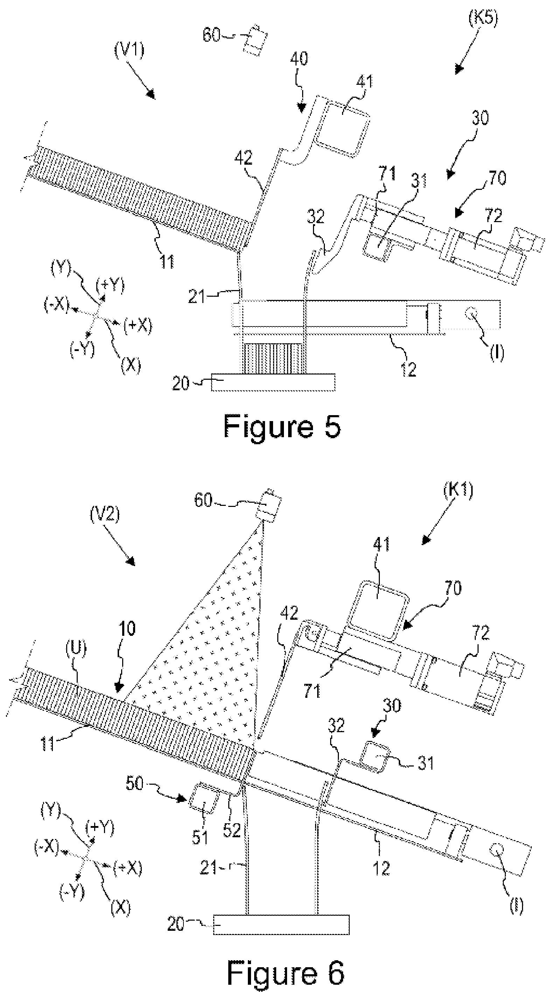

In Figure 5, a representative frontal view of the subject matter grouping machine (1) at the release position (K5) is given. Accordingly, the release position (K5) relates to release of the products (U), grouped on the transport path (10), onto the conveyor line (20). For providing this, the second transport path (12) rotates in opposite manner to clockwise direction (SY) around the rotation center (I) and leaves the products (U), which exist thereon, onto the conveyor line (20) by opening its base. During this movement, the guide elements (21) support the products (U). Afterwards, the second transport path (12) is rotated again in clockwise direction (SY) and is passed to the first position. The cycle is repeated continuously in this manner. The conveyor line (20) continuously moves. The formed portions are fed to the next process step at the final point of the conveyor line (20) by means of a pushing or drawing mechanism.

With reference to Figures 6-10, in the second version (V2), the grouping machine (1) has a first movement unit (30) which can move in X axis (X) and a second movement unit (40) which can move in X axis and Y axis (Y). Additionally, the portioning machine also has the third movement unit (50). This third movement unit (50) is configured to be able to move in Y axis (Y). The grouping machine (1) operates in the same manner structurally in the first version (V1) and in the second version (V2). However, there are minimal differences in between in terms of operation principle.

In Figure 6, a representative frontal view of the subject matter grouping machine (1) at the first position (K1) is given. The first position (K1) is essentially the beginning step for packaging of the products (U). At this first position (K1), the products (U) are sufficiently arranged on the transport path (10). In the transport path (10), the first transport path (11) and the second transport path (12) are in contact with each other. The first movement unit (30) stays in a free position on the second transport path (12). The second movement unit (40) stays in a free manner in the vicinity of the transport path (10). The third movement unit (50) moves the stopper part (52) in direction +Y (+Y) and is rested to the transport path (10). By means of this, the products (U) are kept in the transport path (10). Moreover, the image processing unit (60) is in image capturing mode. In the grouping machine (1), the distances which the stopping shoe (32) shall move in +X direction (+X) and in -X direction (-X) are predetermined values. These values are entered by the operator to the control panel of the grouping machine (1) before packaging. The photograph taken by the image processing unit (60) is sent to a processor where the image processing technology exists.

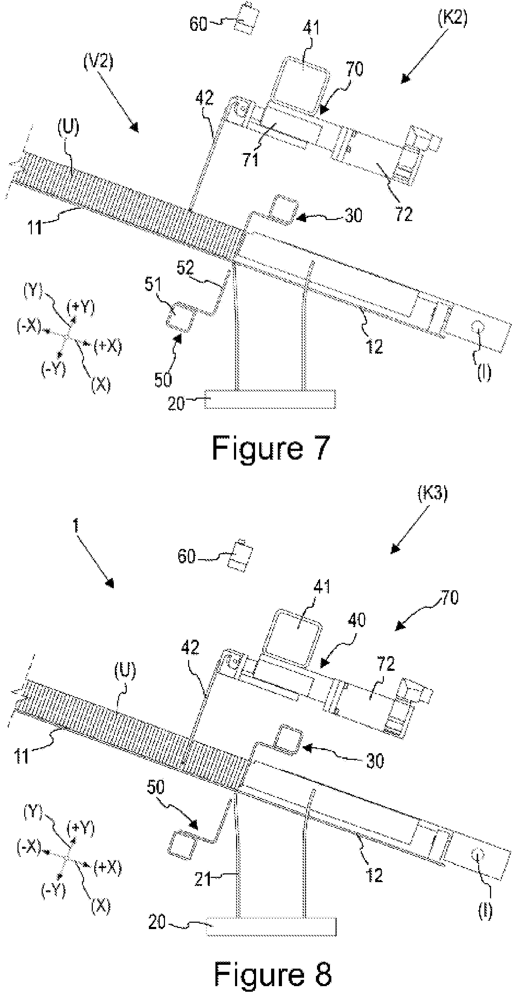

In Figure 7, a representative frontal view of the subject matter grouping machine (1) at the resting position (K2) is given. The resting position (K2) is the position where the products (U) which exist in the transport path (10) are rested to the first movement unit (30). For providing this, the stopping shoe (32) moves in -X direction (-X) from the first position (K1) and is rested to the products (U) in the transport path (10). Meanwhile, the third movement unit (50) is moved in -Y direction (-Y). By means of this, the stopper part (52) is separated from the products (U) and holds the stopping shoe (32).

In Figure 8, a representative frontal view of the subject matter grouping machine (1) at the drawback position (K3) is given. At said drawback position (K3), the products (U) which exist in the transport path (10) are moved in +X direction (+X) in a controlled manner. For providing this, the first movement unit (30) moves the stopping shoe (32) in +X direction (+X). Additionally, the second movement unit (40) moves the separator (42) in -X direction (-X) and the distance in between becomes bigger. Additionally, the second movement unit (40) moves the separator (42) in -Y direction (-Y) and enters between the products (U). These distances are adjusted at a predetermined value. The data received from the image processing unit (60) are important in adjusting the distance between the stopping shoe (32) and the separator (42). The image processing unit (60) detects the distance depending on the number of products while grouping the products (U) and manages the second movement unit (40). Depending on the data received from the image processing unit (60), the precise adjustment unit (70) moves the separator (42) in a relative manner and precise adjustment is made.

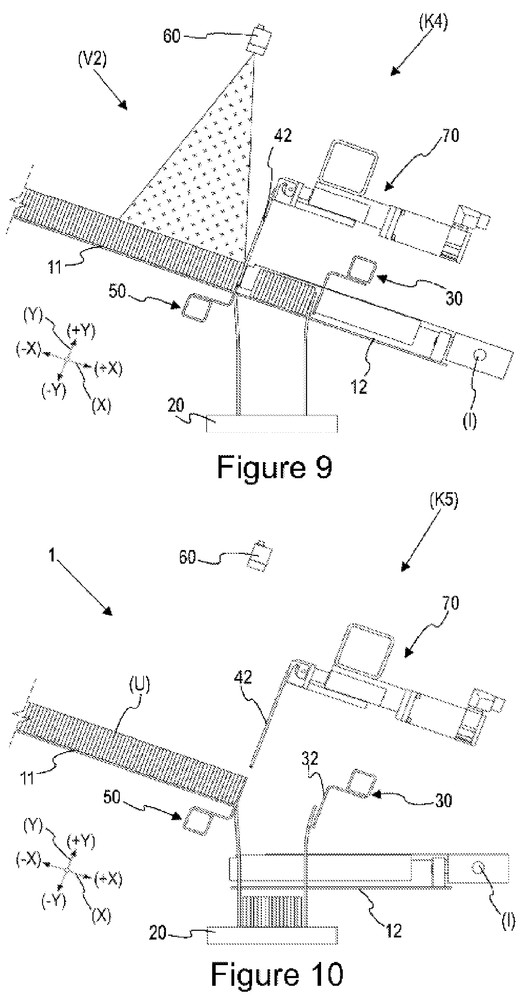

In Figure 9, a representative frontal view of the subject matter grouping machine (1) at the separation position (K4) is given. Separation is realized for grouping in the transport path (10) at the separation position (K4). At the separation position (K4), the second movement unit (40) completes the movement of the separator (42) in -Y direction. During this process, the first movement unit (30) and the second movement unit (40) move in +X direction with relative movement, and are positioned in the second transport path (12). During this process, the first movement unit (30) and the second movement unit (40) move in +X direction by means of relative movement and are positioned in the second transport path (12). Meanwhile, the third movement unit (50) moves the stopper part (52) in +Y direction (+Y), and provides holding of the products (U) in the transport path (10). Moreover, while the products (U) exist on the transport path (10), the image processing unit (60) captures images again. The image captured by the image processing unit (60) is transmitted to the processor. In the image processed here, the product (U) which is in number corresponding to the number of products (U) desired to exist in a single group, is marked and is transformed into distance information and is turned into a data which can be used by the precise adjustment unit (70).

In Figure 10, a representative frontal view of the subject matter grouping machine (1) at the release position (K5) is given. Accordingly, the release position (K5) relates to release of the grouped products (U), which exist on the transport path (10), onto the conveyor line (20). At the release position (K5), the separator (42) which exists on the second movement unit (40) advances in +Y direction (+Y) and leaves the product (U) holding function completely to the stopper part (52). Afterwards, the second transport path (12) rotates in opposite manner to clockwise direction (SY) around the rotation center (I) and leaves the products (U), which exist thereon, onto the conveyor line (20) by opening its base. During this movement, the guide elements (21) support the products (U). Then, the second transport path (12) is again rotated in the clockwise direction (SY) and is passed to the first position (K1). The cycle is repeated continuously in this manner. The conveyor line (20) continuously moves. The formed portions are fed to the next process step at the final point of the conveyor line (20) by means of a pushing or drawing mechanism.

In alternative versions of the present invention, the precise adjustment unit (70) can exist both on the first movement unit (30) and on the second movement unit (40). Additionally, the precise adjustment unit (70) is configured to move both in X axis (X) and in Y axis (Y) with respect to the movement unit where said precise adjustment unit (70) exists. By means of these embodiments, the movement capability of the grouping machine (1) is improved. By means of the usage of the precise adjustment unit (70), relative movement capability is added to the first movement unit (30) and to the second movement unit (40) and the disadvantages of the volumetric movement are eliminated.

In a possible embodiment of the present invention, in the subject matter grouping machine (1), there can be pluralities of transport paths (10). Thanks to this, portioning is realized in more than one transport path (10) and thereby efficiency is increased.

By means of all of these embodiments, a mechanical structure is obtained which is actuated in accordance with the data received from the image processing unit (60) for portioning of the products (U). As the position data received from the image processing unit (60) is used in the separation process, error ratio is decreased, and waste ratio is reduced.

The protection scope of the present invention is set forth in the annexed claims and is not restricted to the illustrative disclosures given above, under the detailed description.

### REFERENCE NUMBERS

1 Grouping machine
10 Transport path
11 First transport path
12 Second transport path
20 Conveyor line
21 Guide element
30 First movement unit
31 First console
32 Stopping shoe
40 Second movement unit
41 Second console
42 Separator
50 Third movement unit
51 Third console
52 Stopper part
60 Image processing unit
70 Precise adjustment unit
71 Guided cylinder
72 Drive element
(V1) First version
(V2) Second version
(K1) First position
(K2) Stopping position
(K3) Drawback position
(K4) Separation position
(K5) Release position
(I) Rotation center
(II) Clockwise direction
(X) X Axis
(+X) +X Direction
(-X) -X Direction
(Y) Y Axis
(+Y) +Y Direction
(-Y) -Y Direction
(U) Product

## Claims

1. A grouping machine (1) for grouping of products (U), aligned in at least one transport path (10) of the grouping machine (1), at predetermined numbers, and comprising:
at least one first movement unit (30) which can move at least one stopping shoe (32), positioned in the vicinity of the transport path (10) and which manages movement of products (U) along the transport path (10), in predetermined manner volumetrically in an X axis (X), and
at least one second movement unit (40) which can move at least one separator (42) in a predetermined manner volumetrically in a Y axis (Y), for providing separation of products (U), kept on the transport path (10) by said first movement unit (30), from predetermined number of product (U) arrays,
at least one processing unit (60) which can detect the separation distance for determining the position of the first movement unit (30) and of the second movement unit (40) with respect to the products (U), and at least one precise adjustment unit (70) which can relatively move for precisely positioning at least one of said stopping shoe (32) provided on the first movement unit (30), and said separator (42) provided on the second movement unit (40) depending on the data received from said processing unit (60), **characterized in that** the processing unit (60) is an image processing unit, and **in that** said transport path (10) comprises at least one first transport path (11) where the products (U) are accumulated, and at least one second transport path (12) which can at least partially rotate around at least one rotation center (I) in order to provide carrying of the grouped products (U) to the next process step.

2. The grouping machine (1) according to claim 1, **wherein** at least one drive element (72) is provided which is position-controlled for producing force to the relative movement on said precise adjustment unit (70).

3. The grouping machine (1) according to claim 1, **wherein** at least one guided cylinder (71) is provided for linear movement on the precise adjustment unit (70).

4. The grouping machine (1) according to claim 1, **wherein** the precise adjustment unit (70) is provided on the first movement unit (30).

5. The grouping machine (1) according to claim 1, **wherein** the precise adjustment unit (70) is provided on the second movement unit (40).

6. The grouping machine (1) according to claim 1, **wherein** the precise adjustment unit (70) is provided both on the first movement unit (30) and on the second movement unit (40).

7. The grouping machine (1) according to claim 1, **wherein** the precise adjustment unit (70) is relatively movable on at least one of X axis (X) and Y axis (Y).

8. The grouping machine (1) according to claim 1, **wherein** the transport path (10) is positioned in an at least partially inclined form to the floor in order to enable movement of the products (U) in X axis (X) depending on gravity.

9. The grouping machine (1) according to claim 1, **wherein** at least one conveyor line (20) is provided which is associated in a manner releasing the grouped products (U) by means of at least partial rotation of said second transport path (12) in said rotation center (I).

10. The grouping machine (1) according to claim 1, **wherein** at least one third movement unit (50) is provided for delimiting the movement of products (U), which exist on the transport path (10), in X axis (X).

11. The grouping machine (1) according to claim 10, **wherein** at least one stopper part (52) is provided, which can be rested to the product (U), on the third movement unit (50).

12. A method carried out by the grouping machine (1) according to claim 1, **wherein** said method comprises the steps of positioning at:
A first position (K1) where the products (U) are aligned in the transport path (10) and which provides keeping of the aligned products (U) at a second movement unit (40) side,
A resting position (K2) where the second movement unit (40) releases the products (U) and where meanwhile the first movement unit (30) keeps the products (U),
At least one drawback position (K3) where the products (U) are moved in X axis (X) at least partially,
A separation position (K4) where the products (U) to be grouped are separated from other products (U) by moving relatively in addition to the present volumetric movement of at least one of the first movement unit (30) and the second movement unit (40) by the precise adjustment unit (70) in accordance with the position data received from the image processing unit (60) and the method comprises the step of positioning the products (U), separated after the separation position (K4), in at least one release position (K5) by means of rotation of the second transport path (12) around the rotation center (I) at least partially.

## Patentansprüche

1. Gruppiermaschine (1) zum Gruppieren von Produkten (U), die in mindestens einem Transportweg (10) der Gruppiermaschine (1) in vorbestimmten Anzahlen ausgerichtet sind, und umfassend:
mindestens eine erste Bewegungseinheit (30), die mindestens einen in der Nähe des Transportwegs (10) angeordneten Stoppschuh (32) bewegen kann und die die Bewegung von Produkten (U) entlang des Transportwegs (10) in vorbestimmter Weise volumetrisch in einer X-Achse (X) steuert, und
mindestens eine zweite Bewegungseinheit (40), die mindestens einen Separator (42) in vorbestimmter Weise volumetrisch in einer Y-Achse (Y) bewegen kann, um eine Trennung der Produkte (U), die durch die genannte erste Bewegungseinheit (30) auf dem Transportweg (10) gehalten werden, von einer vorbestimmten Anzahl von Anordnungen der Produkte (U) bereitzustellen, mindestens eine Verarbeitungseinheit (60), die den Trennabstand erfassen kann, um die Position der ersten Bewegungseinheit (30) und der zweiten Bewegungseinheit (40) in Bezug auf die Produkte (U) zu bestimmen, und mindestens eine Feineinstellungseinheit (70), die sich relativ bewegen kann, um mindestens einen der an der ersten Bewegungseinheit (30) vorgesehenen genannten Stoppschuhe (32) und den an der zweiten Bewegungseinheit (40) vorgesehenen genannten Separator (42) in Abhängigkeit von den von der genannten Verarbeitungseinheit (60) empfangenen Daten präzise zu positionieren, **dadurch gekennzeichnet, dass** die Verarbeitungseinheit (60) eine Bildverarbeitungseinheit ist, und dass der genannte Transportweg (10) mindestens einen ersten Transportweg (11), auf dem die Produkte (U) angesammelt werden, und mindestens einen zweiten Transportweg (12) umfasst, der sich zumindest teilweise um mindestens ein Drehzentrum (I) drehen kann, um das Befördern der gruppierten Produkte (U) zum nächsten Prozessschritt bereitzustellen.

2. Gruppiermaschine (1) gemäß Anspruch 1, **wobei** mindestens ein Antriebselement (72) vorgesehen ist, das positionsgesteuert ist, um eine Kraft für die Relativbewegung an der Feineinstellungseinheit (70) zu erzeugen.

3. Gruppiermaschine (1) nach Anspruch 1, **wobei** mindestens ein geführter Zylinder (71) für eine lineare Bewegung an der Feineinstellungseinheit (70) vorgesehen ist.

4. Gruppiermaschine (1) nach Anspruch 1, **wobei** die Feineinstellungseinheit (70) an der ersten Bewegungseinheit (30) vorgesehen ist.

5. Gruppiermaschine (1) nach Anspruch 1, **wobei** die Feineinstellungseinheit (70) an der zweiten Bewegungseinheit (40) vorgesehen ist.

6. Gruppiermaschine (1) nach Anspruch 1, **wobei** die Feineinstellungseinheit (70) sowohl an der ersten Bewegungseinheit (30) als auch an der zweiten Bewegungseinheit (40) vorgesehen ist.

7. Gruppiermaschine (1) nach Anspruch 1, **wobei** die Feineinstellungseinheit (70) auf mindestens einer der X-Achse (X) und der Y-Achse (Y) relativ bewegbar ist.

8. Gruppiermaschine (1) nach Anspruch 1, **wobei** der Transportweg (10) in zumindest teilweise geneigter Form zum Boden positioniert ist, um eine Bewegung der Produkte (U) in der X-Achse (X) in Abhängigkeit von der Schwerkraft zu ermöglichen.

9. Gruppiermaschine (1) nach Anspruch 1, **wobei** mindestens eine Förderlinie (20) vorgesehen ist, die derart zugeordnet ist, dass die gruppierten Produkte (U) mittels zumindest teilweiser Drehung des genannten zweiten Transportwegs (12) um das genannte Drehzentrum (I) freigegeben werden.

10. Gruppiermaschine (1) nach Anspruch 1, **wobei** mindestens eine dritte Bewegungseinheit (50) vorgesehen ist, um die Bewegung von Produkten (U), die sich auf dem Transportweg (10) befinden, in der X-Achse (X) zu begrenzen.

11. Gruppiermaschine (1) gemäß Anspruch 10, **wobei** an der dritten Bewegungseinheit (50) mindestens ein Stopperteil (52) vorgesehen ist, das am Produkt (U) anliegen kann.

12. Verfahren, das von der Gruppiermaschine (1) nach Anspruch 1 durchgeführt wird, **wobei** das genannte Verfahren die folgenden Schritte des Positionierens umfasst:
an einer ersten Position (K1), in der die Produkte (U) im Transportweg (10) ausgerichtet sind und die das Halten der ausgerichteten Produkte (U) an einer Seite der zweiten Bewegungseinheit (40) bereitstellt,
an einer Ruheposition (K2), in der die zweite Bewegungseinheit (40) die Produkte (U) freigibt und währenddessen die erste Bewegungseinheit (30) die Produkte (U) hält,
an mindestens einer Rückzugsposition (K3), in der die Produkte (U) zumindest teilweise in der X-Achse (X) bewegt werden,
an einer Trennposition (K4), bei der die zu gruppierenden Produkte (U) von anderen Produkten (U) durch eine relative Bewegung zusätzlich zu der vorhandenen volumetrischen Bewegung mindestens einer der ersten Bewegungseinheit (30) und der zweiten Bewegungseinheit (40) durch die Feineinstellungseinheit (70) gemäß den von der Bildverarbeitungseinheit (60) empfangenen Positionsdaten getrennt werden, und das Verfahren den Schritt des Positionierens der nach der Trennposition (K4) getrennten Produkte (U) in mindestens einer Freigabeposition (KS) mittels zumindest teilweiser Drehung des zweiten Transportwegs (12) um das Drehzentrum (I) umfasst.

## Revendications

1. Machine de groupage (1) destinée au groupage de produits (U), alignés dans au moins une voie de transport (10) de la machine de groupage (1), selon des nombres prédéterminés, et comprenant :
au moins une première unité de déplacement (30) qui peut déplacer au moins un patin d'arrêt (32), positionné à proximité de la voie de transport (10) et qui gère le déplacement des produits (U) le long de la voie de transport (10), de manière volumétriquement prédéterminée selon un axe X (X), et
au moins une deuxième unité de déplacement (40) qui peut déplacer au moins un séparateur (42) de manière volumétriquement prédéterminée selon un axe Y (Y), pour assurer la séparation des produits (U), maintenus sur la voie de transport (10) par ladite première unité de déplacement (30), à partir d'un nombre prédéterminé de rangées de produits (U),
au moins une unité de traitement (60) qui peut détecter la distance de séparation pour déterminer la position de la première unité de déplacement (30) et de la deuxième unité de déplacement (40) par rapport aux produits (U), et au moins une unité de réglage précis (70) qui peut se déplacer relativement pour positionner précisément au moins l'un dudit patin d'arrêt (32) prévu sur la première unité de déplacement (30), et dudit séparateur (42) prévu sur la deuxième unité de déplacement (40) en fonction des données reçues de ladite unité de traitement (60), **caractérisée en ce que** l'unité de traitement (60) est une unité de traitement d'image, et **en ce que** ladite voie de transport (10) comprend au moins une première voie de transport (11) dans laquelle les produits (U) sont accumulés, et au moins une deuxième voie de transport (12) qui peut tourner au moins partiellement autour d'au moins un centre de rotation (I) afin d'assurer le transport des produits groupés (U) vers l'étape de processus suivante.

2. Machine de groupage (1) selon la revendication 1, **dans laquelle** au moins un élément d'entraînement (72) est prévu, lequel est commandé en position pour produire une force destinée au mouvement relatif sur ladite unité de réglage précis (70).

3. Machine de groupage (1) selon la revendication 1, **dans laquelle** au moins un vérin guidé (71) est prévu pour un mouvement linéaire sur l'unité de réglage précis (70).

4. Machine de groupage (1) selon la revendication 1, **dans laquelle** l'unité de réglage précis (70) est prévue sur la première unité de déplacement (30).

5. Machine de groupage (1) selon la revendication 1, **dans laquelle** l'unité de réglage précis (70) est prévue sur la deuxième unité de déplacement (40).

6. Machine de groupage (1) selon la revendication 1, **dans laquelle** l'unité de réglage précis (70) est prévue à la fois sur la première unité de déplacement (30) et sur la deuxième unité de déplacement (40).

7. Machine de groupage (1) selon la revendication 1, **dans laquelle** l'unité de réglage précis (70) est mobile relativement selon au moins l'un de l'axe X (X) et de l'axe Y (Y).

8. Machine de groupage (1) selon la revendication 1, **dans laquelle** la voie de transport (10) est positionnée sous une forme au moins partiellement inclinée par rapport au sol afin de permettre le déplacement des produits (U) selon l'axe X (X) en fonction de la gravité.

9. Machine de groupage (1) selon la revendication 1, **dans laquelle** au moins une ligne de convoyage (20) est prévue, laquelle est associée de manière à libérer les produits groupés (U) au moyen de la rotation au moins partielle de ladite deuxième voie de transport (12) autour dudit centre de rotation (I).

10. Machine de groupage (1) selon la revendication 1, **dans laquelle** au moins une troisième unité de déplacement (50) est prévue pour délimiter le déplacement des produits (U), qui existent sur la voie de transport (10), selon l'axe X (X).

11. Machine de groupage (1) selon la revendication 10, **dans laquelle** au moins une partie de butée (52) est prévue, laquelle peut être appuyée contre le produit (U), sur la troisième unité de déplacement (50).

12. Méthode mise en œuvre par la machine de groupage (1) selon la revendication 1, **dans laquelle** ladite méthode comprend les étapes de positionnement à :
Une première position (K1) où les produits (U) sont alignés dans la voie de transport (10) et qui assure le maintien des produits alignés (U) du côté de la deuxième unité de déplacement (40),
Une position de repos (K2) où la deuxième unité de déplacement (40) libère les produits (U) et où, entre-temps, la première unité de déplacement (30) maintient les produits (U),
Au moins une position de recul (K3) où les produits (U) sont déplacés au moins partiellement selon l'axe X (X),
Une position de séparation (K4) où les produits (U) à grouper sont séparés des autres produits (U) par déplacement relatif en plus du mouvement volumétrique présent d'au moins l'une de la première unité de déplacement (30) et de la deuxième unité de déplacement (40) par l'unité de réglage précis (70) conformément aux données de position reçues de l'unité de traitement d'image (60) et la méthode comprend l'étape de positionnement des produits (U), séparés après la position de séparation (K4), dans au moins une position de libération (KS) au moyen de la rotation de la deuxième voie de transport (12) autour du centre de rotation (I) au moins partiellement.
